# FASCICULE DE BREVET EUROPEEN

(11) **EP 1 306 324 B1**
(45) Date de publication et mention de la délivrance du brevet: **05.07.2006**
(21) Numéro de dépôt: 02292301.5
(22) Date de dépôt: 19.09.2002
(51) Int. Cl.: B65G 23/36, B65G 47/26, B65G 13/071

(54) **Système d'entrainement pour module convoyeur d'objets**
Antriebssystem für Stückgutfördermodul
Drive system for article conveyor module

(30) Priorité: 26.10.2001 FR 0113907
(43) Date de publication de la demande: 02.05.2003
(73) Titulaire: Solystic, 94257 Gentilly Cedex (FR)
(72) Inventeur: Pellegrin, Laurent, 26250 Livron (FR); Rieu, Jean, 07800 Saint Georges Les Bains (FR)
(74) Mandataire: Prugneau, Philippe

(56) Documents cités:
- DE-A- 2 029 395
- DE-A- 19 912 391
- FR-A- 2 517 649
- GB-A- 2 164 311

## Description

L'invention concerne un module convoyeur d'objets ayant un système d'entraînement comprenant une platine support sur laquelle est montée une poulie de synchronisation et une courroie motrice engagée dans ladite poulie de synchronisation, la poulie de synchronisation étant destinée à être accouplée à la courroie motrice d'un autre module convoyeur pour réaliser une synchronisation des deux modules convoyeurs.

L'invention s'applique plus particulièrement à un module convoyeurs à courroies ou analogue utilisé pour convoyer des objets postaux tels que des lettres.

Un module convoyeur à courroies pour des objets postaux par exemple comporte sur sa partie supérieure des galets qui entraînent par friction les courroies de convoyage, lesquelles longent le châssis du convoyeur sur une distance pouvant faire plusieurs dizaines de mètres. Les modules convoyeurs sont disposés en alignement sur toute la longueur des courroies de convoyage et donc du châssis du convoyeur. La platine support des modules convoyeurs est généralement disposée à plat horizontalement, la face supérieure de la platine support correspondant à la partie supérieure du module convoyeur. La courroie motrice d'un système d'entraînement de module convoyeur est montée sur la face inférieure de la platine support du module et est engagée sur un ensemble de poulies (ou galets) montées sur cette face inférieure de la platine support. Ces poulies sur la face inférieure de la platine support sont solidaires en rotation avec des galets situés sur la partie supérieure du module convoyeur par l'intermédiaire d'axes de rotation communs traversant la platine support. La courroie motrice de chaque module convoyeur est mise en mouvement par un moteur électrique propre au système d'entraînement du module convoyeur à travers une des poulies sur lesquelles est engagée la courroie motrice. Pour que les galets situés sur la partie supérieure du module convoyeur soient tous entraînés en rotation à la même vitesse, il est nécessaire de synchroniser les modules convoyeurs parce que les différents moteurs des systèmes d'entraînement peuvent présenter des dispersions dans leurs vitesses de rotation. Cette synchronisation s'effectue en accouplant deux à deux les courroies d'entraînement de deux modules convoyeurs adjacents. Un système d'entraînement de module convoyeur comporte actuellement deux poulies de synchronisation à double étage disposées respectivement aux deux extrémités de la platine support (voir, par exemple, GB-A-2 164 311). Ces deux poulies de synchronisation sont entraînées en rotation par la courroie motrice et sont disposées à l'intérieur de celle-ci. La courroie motrice est engagée sur le premier étage des deux poulies de synchronisation. L'accouplement de deux courroies motrices de deux modules convoyeurs adjacents est réalisé actuellement en engageant une courroie de synchronisation sur le second étage des deux poulies de synchronisation respectivement des deux modules convoyeurs adjacents qui sont disposés côte à côte. Cet accouplement présente l'inconvénient de nécessiter la pose et le réglage sur site des courroies de synchronisation, ce qui est coûteux en temps.

Le but de l'invention est de remédier à cet inconvénient en proposant une architecture de système d'entraînement de module convoyeur permettant de simplifier les étapes d'installation sur site.

A cet effet, l'invention a pour objet un module convoyeur d'objets ayant un système d'entraînement comprenant une platine support sur laquelle est montée une poulie de synchronisation et une courroie motrice engagée dans ladite poulie de synchronisation, la poulie de synchronisation étant destinée à être accouplée à la courroie motrice d'un autre module convoyeur pour réaliser une synchronisation des deux modules convoyeurs, caractérisée en ce que la poulie de synchronisation est montée à l'extérieur de la courroie motrice.

Avec cet agencement, les courroies motrices de deux modules convoyeurs adjacents sont accouplées en mettant en appui l'une des courroies motrices contre la poulie de synchronisation de l'autre module convoyeur et la synchronisation des deux modules adjacents ne nécessite pas l'installation d'une courroie de synchronisation intermédiaire.

Plus particulièrement, selon un mode de réalisation particulier d'un module convoyeur selon l'invention, ladite courroie motrice a une portion sensiblement rectiligne qui longe une première extrémité de la platine et dans lequel la poulie de synchronisation est montée à une seconde extrémité de la platine destinée à être juxtaposée à une première extrémité de la platine support d'un autre module convoyeur sensiblement identique.

Selon un autre mode de réalisation particulier de l'invention, les première et seconde extrémités de la platine d'un système d'entraînement de module convoyeur sont constituées par deux flancs latéraux de la platine sensiblement parallèles, la poulie de synchronisation faisant saillie sur l'un des flancs de la platine. Avec cet agencement, deux modules convoyeurs adjacents peuvent être montés bord à bord pour l'accouplement des deux courroies motrices.

Selon encore un autre mode de réalisation particulier de l'invention la courroie motrice d'un système d'entraînement de module convoyeur est mise sous tension par un tendeur dynamique à effort constant monté sur la platine tel que par exemple un tendeur à gaz. Avec cet agencement, il n'est pas nécessaire de régler la tension des courroies motrices sur site après montage des modules convoyeurs.

L'invention sera maintenant décrite plus en détail, et en référence aux dessins annexés qui en illustrent une forme de réalisation à titre d'exemple non limitatif.
La figure 1 est une représentation schématique de la face inférieure de la platine d'un système d'entraînement de module convoyeur selon l'invention ;
La figure 2 est une représentation schématique d'une pluralité de modules convoyeurs adjacents selon l'invention en vue de dessous.

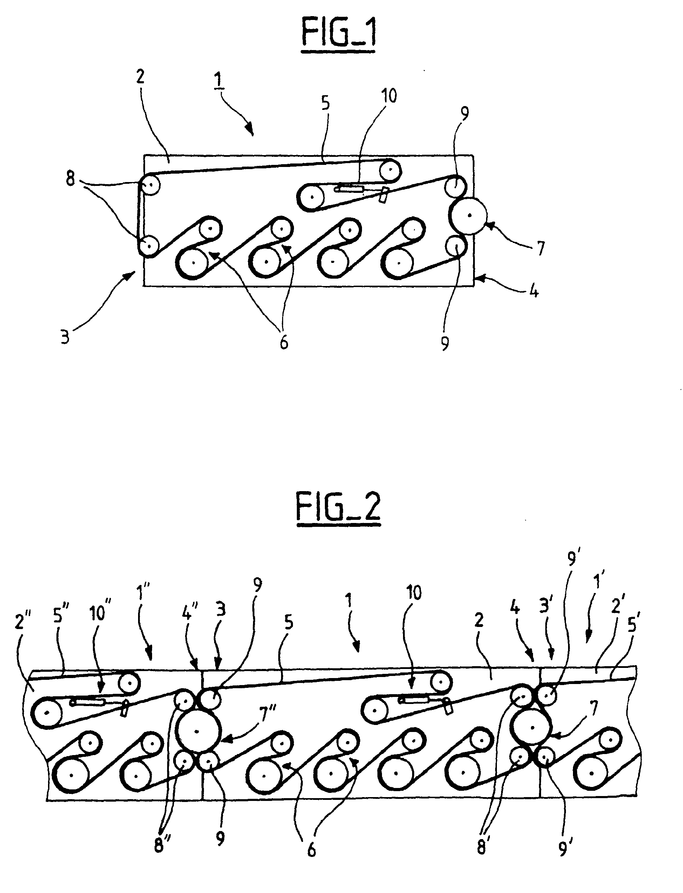

Comme visible figure 1, un module convoyeur d'objets 1 tel qu'un module convoyeur à courroies pour des objets postaux a un système d'entraînement comportant une platine support 2 qui est destinée à être montée sur un châssis de module convoyeur. Cette platine définit une forme sensiblement plane qui s'étend longitudinalement entre une première extrémité 3 et une seconde extrémité 4. Le système d'entraînement du module convoyeur comprend également des galets d'entraînement montés sur la face supérieure de la platine qui sont entraînés par une courroie motrice 5 montée sur la face inférieure de la platine et qui s'étend entre les extrémités 3 et 4. La courroie motrice 5 entraîne les galets de la face supérieure par l'intermédiaire d'une pluralité de poulies 6 montées sur la face inférieure et dans lesquelles elle est engagée. Elle est également engagée dans la poulie d'un moteur électrique non représenté. Dans cet exemple de réalisation, la courroie motrice 5 suit un trajet qui s'étend dans un plan parallèle au plan de la platine 2 pour entraîner les poulies 6 qui tournent selon des axes normaux au plan de la platine 2. Le système d'entraînement du module convoyeur comporte encore une poulie de synchronisation 7 qui est montée sur la face inférieure de la platine au niveau de la seconde extrémité 4 et dans laquelle est engagée la courroie motrice 5. Cette poulie de synchronisation est destinée à être accouplée à la courroie motrice d'un autre module convoyeur adjacent pour synchroniser un module avec l'autre.

Selon l'invention, la poulie de synchronisation est située à l'extérieur du contour défini par la courroie motrice 5, de telle sorte qu'une partie du chemin de roulement de la poulie 7 est libre pour recevoir directement une courroie motrice d'un autre module convoyeur.

Comme visible figure 2, dans laquelle trois modules convoyeurs 1, 1' et 1" selon l'invention sont juxtaposés, les deux courroies motrices 5 et 5' des modules 1 et 1' sont engagées chacune d'un côté de la poulie de synchronisation 7 du module 1 tout en étant situées à l'extérieur de celle-ci. De manière analogue la poulie de synchronisation 7" du module 1" est à l'extérieur des deux courroies motrices 5 et 5" des modules 1 et 1". Avec un tel montage, dit en opposition, les deux courroies motrices 5 et 5" sont en prise dans la poulie 7" -qui est une poulie simple étage- dès que les deux modules 1 et 1" sont juxtaposés l'un contre l'autre. De la même manière les deux courroies motrices 5 et 5' des systèmes d'entraînement des modules 1 et 1' sont en prise dans la poulie de synchronisation 7 dès que les deux modules 1 et 1" sont juxtaposés l'un contre l'autre.

Selon un mode de réalisation particulier, la courroie motrice 5 du module convoyeur 1 a une portion sensiblement rectiligne qui longe la première extrémité 3 de la platine 2 de manière à pouvoir s'engager dans la poulie de synchronisation 7" du module adjacent 1" par simple juxtaposition. Dans ce mode de réalisation, la poulie de synchronisation 7 est montée au niveau de la seconde extrémité 4 de la platine 2 du module 1. Avec cet agencement, deux modules identiques 1 et 1" peuvent être accouplés par simple juxtaposition de la première extrémité 3 du module 1 avec la seconde extrémité 4" du module 1". De façon analogue, le module 1' a sa première extrémité 3' juxtaposée à la seconde extrémité 4 du module 1 pour que les deux modules 1 et 1" soient synchronisés.

Plus particulièrement, la courroie motrice 5 a son trajet qui est imposé par deux premières poulies de guidage 8 espacées le long de la première extrémité 3, ces poulies de guidage 8 ayant également pour rôle de maintenir la courroie motrice 5 en appui contre la poulie de synchronisation 7" du module convoyeur adjacent 1". De manière analogue, deux secondes poulies de guidage 9 sont situées de part et d'autre de la poulie de synchronisation 7 en étant espacées le long de la seconde extrémité 4 pour maintenir la courroie motrice 5 en appui dans la poulie 7.

Selon un autre mode de réalisation particulier de l'invention, les extrémités 3 et 4 de la platine 2 du module convoyeur 1 sont constituées par deux flancs latéraux de la platine sensiblement parallèles l'un à l'autre, et la poulie de synchronisation 7 est montée en saillie par rapport au flanc latéral de la seconde extrémité 4. Dans l'exemple montré figure 1 et 2, chaque platine 2, 2', 2" a sensiblement le contour d'un rectangle dont les petits côtés forment les flancs latéraux. Un système d'entraînement de module convoyeur 1 peut ainsi être positionné par rapport à un autre module convoyeur 1' en mettant les flancs de platine de chaque module en appui l'un contre l'autre pour s'assurer que la poulie de synchronisation 7 du module 1 est en prise sur les deux courroies motrices 5 et 5'. De cette manière, les opérations d'installation sur site sont encore simplifiées puisqu'il suffit de juxtaposer les différents modules convoyeurs sur un châssis en veillant à ce que les flancs de modules adjacents sont en appui deux à deux les uns contre les autres pour que les modules adjacents soient synchronisés deux à deux.

Selon encore un autre mode de réalisation préféré de l'invention, la courroie motrice 5 est tendue par un organe de tension à effort constant 10. Comme connu de l'Etat de la technique, un tel organe de tension comporte par exemple une poulie montée sur un bras oscillant qui est rappelé par un ressort ou par un organe à gaz pour exercer un effort de tension sur la courroie motrice 5. Un tel organe de tension peut être dimensionné pour exercer un effort sensiblement constant sur la courroie motrice 5. De cette façon, la tension de la courroie motrice 5 ne varie pas lorsque deux modules convoyeurs sont accouplés, c'est à dire lorsque la première extrémité 3 d'un module convoyeur 1 est mise sensiblement en appui contre la seconde extrémité 4" d'un autre module convoyeur 1". Avec cet agencement particulier, les réglages de la tension de la courroie motrice 5 peuvent être réalisés en atelier et ne nécessitent pas d'ajustement au cours de l'installation des modules convoyeurs sur site. Un avantage supplémentaire de cet agencement est d'assurer que les accouplements de la poulie 7 avec chaque courroie motrice 5, 5' ont des caractéristiques mécaniques sensiblement identiques en termes d'efforts transmissibles.

## Revendications

1. Module convoyeur d'objets (1, 1', 1") ayant un système d'entraînement comprenant une platine support (2, 2', 2") sur laquelle est montée une poulie de synchronisation (7, 7") et une courroie motrice (5, 5', 5") engagée dans ladite poulie de synchronisation (7, 7"), la poulie de synchronisation (7, 7") étant destinée à être accouplée à la courroie motrice (5, 5', 5") d'un autre module convoyeur (1, 1', 1") pour réaliser une synchronisation des deux systèmes d'entraînement (1, 1', 1"), **caractérisée en ce que** ladite courroie motrice (5, 5') du module convoyeur a une portion sensiblement rectiligne qui longe une première extrémité (3, 3') de la platine (2, 2') de ce module, **en ce que** ladite poulie de synchronisation (7, 7") est montée à une seconde extrémité (4, 4") de la platine (1, 1") de ce module, cette seconde extrémité du module étant destinée à être juxtaposée à une première extrémité (3, 3') de la platine support (2, 2') de l'autre module convoyeur (1, 1') adjacent sensiblement identique, et **en ce que** la poulie de synchronisation (7, 7") du module est montée à l'extérieur de ladite courroie motrice (5, 5', 5") du système d'entraînement de ce module convoyeur (1, 1', 1") de sorte que la synchronisation de deux modules convoyeurs est réalisée par la mise en appui de la poulie de synchronisation du module convoyeur contre la courroie motrice de l'autre module convoyeur adjacent.

2. Module convoyeur selon la revendication 1, dans lequel lesdites première et seconde extrémités (3, 3', 4, 4") de la platine (2, 2', 2") d'un module convoyeur (1, 1', 1") sont constituées par deux flancs latéraux sensiblement parallèles de la platine (2, 2', 2"), la poulie de synchronisation (7, 7") faisant saillie sur un des flancs de la platine.

3. Module convoyeur selon l'une des revendications 1 à 2, dans lequel la courroie motrice (5, 5") d'un module convoyeur est mise sous tension par un tendeur dynamique (10, 10") à effort constant monté sur la platine (2, 2").

4. Module convoyeur selon la revendication 3, dans lequel le tendeur dynamique (10, 10") est un tendeur à gaz.

5. Convoyeur comprenant un ou plusieurs modules selon l'une des revendication 1 à 4 disposés adjacents deux à deux.

## Claims

1. Article conveyor module (1,1',1") having a drive system comprising a support plate (2,2',2") on which a synchronization pulley (7,7") is mounted and a drive belt (5,5',5") engaged in said synchronization pulley (7,7"), the synchronization pulley (7,7") being designed to be coupled with the drive belt (5,5',5") of another conveyor module (1,1',1") to perform a synchronization of the two drive systems (1,1',1 "), **characterized in that** said drive belt (5,5') of the conveyor module has a substantially rectilinear portion running along a first end (3,3') of the plate (2,2') of this module, **in that** said synchronization pulley (7,7") is mounted at a second end (4,4") of the plate (1,1") of this module, this second end of the module being intended to be juxtaposed to a first end (3,3') of the support plate (2,2') of the adjacent other conveyor module (1,1') substantially identical, and **in that** the synchronization pulley (7,7") of the module is mounted outside said drive belt (5,5',5") of the drive system of this conveyor module (1,1',1") such that the synchronization of two conveyor modules is performed by the synchronization pulley of the conveyor module bearing against the drive belt of the adjacent other conveyor module.

2. Conveyor module according to claim 1, in which said first and second ends (3,3',4,4") of the plate (2,2',2") of a conveyor module (1,1',1") are constituted by two substantially parallel lateral flank of the plate (2,2',2"), the synchronization pulley (7,7") projecting from one of the flanks of the plate.

3. Conveyor module according to one of claims 1 to 2, in which the drive belt (5,5") of a conveyor module is tensioned by a constant force dynamic tensioner (10,10") mounted on the plate (2,2").

4. Conveyor module according to claim 3, in which the dynamic tensioner (10,10") is a gas tensioner.

5. Conveyor comprising one or more modules according to anyone of claims 1 to 4 disposed adjacent to one another in pairs.

## Patentansprüche

1. Fördermodul für Stückgut (1, 1', 1") mit einem Antriebssystem, umfassend einen Stützträger (2, 2', 2"), auf den eine Synchronisationsrolle (7, 7") und ein in der Synchronisationsrolle (7, 7") eingesetztes Antriebsband (5, 5', 5") montiert ist, wobei die Synchronisationsrolle (7, 7") dazu bestimmt ist, mit dem Antriebsband (5, 5', 5") eines anderen Fördermoduls (1, 1', 1") gekoppelt zu werden, um eine Synchronisation der beiden Antriebssysteme (1, 1', 1") zu erreichen,
**dadurch gekennzeichnet,**
**dass** das Antriebsband (5, 5') des Fördermoduls einen im wesentlichen geradlinigen Abschnitt aufweist, der entlang eines ersten Endes (3, 3') des Trägers (2, 2') dieses Moduls verläuft,
**dass** die Synchronisationsrolle (7, 7") an einem zweiten Ende (4, 4") des Trägers (2, 2') dieses Moduls montiert ist, wobei dieses zweite Ende des Moduls dazu bestimmt ist, mit einem ersten Ende (3, 3') des Stützträgers (2, 2') des anderen Fördermoduls (1, 1'), das im wesentlichen identisch ist, benachbart zusammengesetzt zu werden, und
**dass** die Synchronisationsrolle (7, 7') des Moduls außerhalb des Antriebsbands (5, 5', 5") des Antriebssystems dieses Fördermoduls (1, 1', 1") derart montiert ist, dass die Synchronisation der beiden Fördermodule erreicht wird durch das Abstützen der Synchronisationsrolle des Fördermoduls gegen das Antriebsband des anderen benachbarten Fördermoduls.

2. Antriebsmodul nach Anspruch 1, bei dem die ersten und zweiten Enden (3, 3', 4, 4") des Trägers (2, 2', 2") eines Fördermoduls (1, 1', 1") gebildet sind durch zwei seitliche, im wesentlichen parallele Flanken des Trägers (2, 2', 2"), wobei die Synchronisationsrolle (7, 7") über eine der Flanken des Trägers vorsteht.

3. Fördermodul nach einem der Ansprüche 1 bis 2, bei dem das Antriebsband (5, 5") eines Fördermoduls durch ein auf dem Träger (2, 2") montiertes dynamisches Spannglied (10, 10") mit konstanter Kraft unter Spannung gesetzt ist.

4. Fördermodul nach Anspruch 3, bei dem das dynamische Spannglied (10, 10") ein Gasspannglied ist.

5. Förderer umfassend eines oder mehrere der Module gemäß der Ansprüche 1 bis 4, die jeweils paarweise benachbart angeordnet sind.
